# EUROPEAN PATENT SPECIFICATION

(11) **EP 2 460 351 B1**
(45) Date of publication and mention of the grant of the patent: **04.09.2019**
(21) Application number: 10806870.1
(22) Date of filing: 26.07.2010
(51) Int. Cl.: H04N 7/00

(54) **AVIONICS DEVICES, SYSTEMS AND METHODS**
LUFTFAHRTVORRICHTUNGEN, -SYSTEME UND -VERFAHREN
DISPOSITIFS AVIONIQUES, SYSTÈMES ET PROCÉDÉS

(30) Priority: 26.07.2009 US 228610 P; 26.07.2009 US 228603 P; 26.07.2009 US 228597 P; 26.07.2009 US 228598 P; 26.07.2009 US 228599 P; 26.07.2009 US 228608 P; 26.07.2009 US 228601 P; 23.07.2010 US 367041 P; 23.07.2010 US 367058 P
(43) Date of publication of application: 06.06.2012
(73) Proprietor: Aspen Avionics, Inc., Albuquerque, NM 87110 (US)
(72) Inventor: LYONS, Peter, Albuquerque NM 87120 (US); BETHEL, Jeffrey, Albuquerque NM 87106 (US); KYRIAKOS, Constantinos, Albuquerque NM 87111 (US); BRODEGARD, William, Albequerque NM 87110 (US); HEINZ, Penny, Rosamond CA 93560 (US); BERLIN, David, Albuquerque NM 87133 (US); RIEB, Sean, Albuquerque NM 87105 (US); MALERICH, Tony, Santa Clara CA 95050 (US); TURNER, Brian, Albuquerque NM 87110 (US)
(74) Representative: Haseltine Lake Kempner LLP
(86) International application number: PCT/US2010/043285
(87) International publication number: WO 2011/017063

(56) References cited:
- US-A- 6 038 498
- US-A1- 2002 077 921
- US-A1- 2003 105 579
- US-A1- 2003 214 242
- US-A1- 2006 244 636
- US-A1- 2008 184 166
- US-B1- 6 199 008

## Description

### BACKGROUND

### 1. Cross-References

This application claims the benefit of, and priority based upon, co-pending United States Provisional Patent Applications Serial Number 61/228,610, entitled "Reversionary Architecture System and Method"; Serial Number 61/228,603, entitled "Pitot Pressure Sensing System and Method"; Serial Number 61/228,601, entitled "LCD Display Dimming System and Method"; Serial Number 61/228,608, entitled "Information Page Selection System and Method"; Serial Number 61/228,599, entitled "Altitude Marker System and Method"; Serial Number 61/228,598, entitled "Multifunction Avionics Display User Interface Method"; and Serial Number 61/228,597, entitled "Dynamic Topography Resolution System and Method of Display", all six filed July 26, 2009; and United States Provisional Patent Applications Serial Number 61/367,041, entitled "Avionics Display"; and Serial Number 61/367,058, entitled "Avionics Display", both filed July 23, 2010.

### 2. Field

The present general inventive concept relates to avionics devices, displays, and systems and methods of display for avionics devices. More particularly the inventive concept relates to methods and systems to select and display information on a display screen.

### 3. Description of the Related Art

Conventional avionics displays use an X, Y cursor function to access items on avionics screens like airports, VOR's, and weather information based on down-linked reports such as METARS, AIRMETS, SIGMETS.

Conventional avionics displays are limited to providing a single function for a single page. Pop up displays are provided on some conventional avionics systems. These pop-up displays have limited functionality and cannot display other screens. Secondary information associated with a page that is not being displayed is displayed on a primary display page with the secondary function's data changed and combined into the primary display page and not represented as the original page and data. The secondary data is displayed and is not changeable by the user of these conventional displays.

US2003/0105579A1 discloses a taxi planning system for aircraft which includes predefined reduced selection menus that prompt the pilot with predefined standard taxi routes. A display screen communicates the selection menus and standard routes to the pilot who is able to make a selection with one or more keystrokes.

US2002/0077921A1 discloses an interactive catalog method which includes presenting a portion of a database. The method includes presenting a first tier of selectable graphics images. Each selectable graphics image in the first tier of selectable graphics images represents a first collection of data structures corresponding thereto. The method also includes presenting a second tier of selectable graphics images, in response to a selecting of a selectable graphics image of the first tier to produce a first tier selected graphics image. Each selectable graphics image in the second tier of selectable graphics images represents a second collection of data structures. Each data structure in the second tier also belongs to the first collection of data structures corresponding to the first tier selected graphics image.

US2008/0184166A1 discloses an avionics system having a pilot user interface. A plurality of context dependent input devices, including at least one rotary knob, is provided. A context dependent label for the rotary knob is displayed. Operation of at least one of the input devices causes a rotary selection list to be displayed on a display screen. The rotary selection list includes multiple potential selections, each capable of effecting a change in the avionic system when highlighted.

US 6 199 008 B1 discloses an avionics display for selecting and displaying aeronautical and weather items and information related to those items. Weather and Aeronautical information, stored in separate databases, is merged. Weather and Aeronautical databases are updated separately.

### SUMMARY

The present invention is defined in claim 1, to which reference should now be made. Optional embodiments are defined in the dependent claims.

Embodiments relate to methods and systems to select and display pertinent information regarding aeronautical and weather items on a display screen showing geographical representation of an area. The methods and systems allow for the selection and display of information using knobs to pan to desired location and to highlight and select the desired information for display overlaid on the geographical display. The present general inventive concept eliminates the need for a cursor function to perform these functions.

The foregoing and other objects are intended to be illustrative of the invention and are not meant in a limiting sense. Many possible embodiments of the invention may be made and will be readily evident upon a study of the following specification and accompanying drawings comprising a part thereof. Various features and subcombinations of invention may be employed without reference to other features and subcombinations. Other objects and advantages of this invention will become apparent from the following description taken in connection with the accompanying drawings, wherein is set forth by way of illustration and example, an embodiment of this invention and various features thereof.

### BRIEF DESCRIPTION OF THE DRAWINGS

These and/or other aspects and utilities of the present general inventive concept will become apparent and more readily appreciated from the following description of the embodiments, taken in conjunction with the accompanying drawings. For the purpose of illustration, forms of the present general inventive concept which are presently preferred are shown in the drawings; it being understood, however, that the general inventive concept is not limited to the precise arrangements and instrumentalities shown. In the drawings:
FIGURE 1 is a system of an exemplary embodiment of the present general inventive concept having a display, screen, and knobs.
FIGURE 2 is a system of another exemplary embodiment of the present general inventive concept having a display, screen, and knobs.
FIGURE 3 is a system of another exemplary embodiment of the present general inventive concept having a display, screen, and knobs.
FIGURE 4 is a system of another exemplary embodiment of the present general inventive concept having a display, screen, and knobs.
FIGURE 5 is a system , for use with a method which does not embody the present invention, showing multiple pages on a multifunction avionics display.
FIGURE 6 is a system, for use with a method which does not embody the present invention, showing a single page on a multifunction avionics display.
FIGURE 7 is a system, for use with a method which does not embody the present invention, showing multiple pages on a multifunction avionics display.
FIGURE 8 is a system, for use with a method which does not embody the present invention, showing multiple pages on a multifunction avionics display.
FIGURE 9 is a table showing markers on an altitude tape associated with a minimums alert.
FIGURE 10 is a system, for use with a method which does not embody the present invention, showing markers on an altitude tape associated with a minimums alert.
FIGURE 11 is a diagram of a system which does not embody the present invention.
FIGURE 12 is a flowchart of a system which does not embody the present invention.

### DETAILED DESCRIPTION

This general inventive concept provides methods of displaying information on an avionics device display. Selectable items, and information relating to the selectable items are displayed on the device display screen. The information relating to the selectable items is derived from a source. Examples of sources of information include Navigation Map (Airports, controlled airspace, special use airspace, navigation aids, cultural features, geographic features), METAR, AIRMET/SIGMET, and TFR weather pages. In one embodiment, the information source is stored internally within the avionics device. In another embodiment, the information source is stored at a location remote to the avionics device.

The general inventive concept maintains a dynamically variable database of the selectable items. In one embodiment the database is stored in RAM. In another embodiment, the database is stored on a removable SD memory card, with relevant portions being dynamically stored in RAM. In another embodiment, the database is dynamically maintained at a remote location with periodic update broadcasts being received via satellite signal, such as XM.

The database is accessible by a control processor of the device. The database is updated dynamically to include selectable items only within a predetermined area. In one embodiment, the database is updated dynamically by excluding items outside of the predetermined area. In some embodiments, the predetermined area is updated dynamically, and is based on location of an aircraft. If the aircraft is moving, the predetermined area and the database is dynamically updated to correspond to the location of the aircraft (i.e., roving map). In some embodiments, the predetermined area corresponds to the viewable area of the device display screen. In some embodiments, the predetermined area extends just beyond the viewable area of the display screen.

The database is updated dynamically. In some embodiments, the database is updated by modifying one or more of the selectable items and/or the information relating to the items. In some embodiments, the database is updated by removing and/or adding one or more of selectable items and/or the information relating to the items.

The general inventive concept enables selection of items and/or information in a sequential manner. In some embodiments, the items and/or information is selected by incrementally advancing forward and backward through the database via rotation of a control knob. In some embodiments, the items and/or information is selected by pressing a control knob.

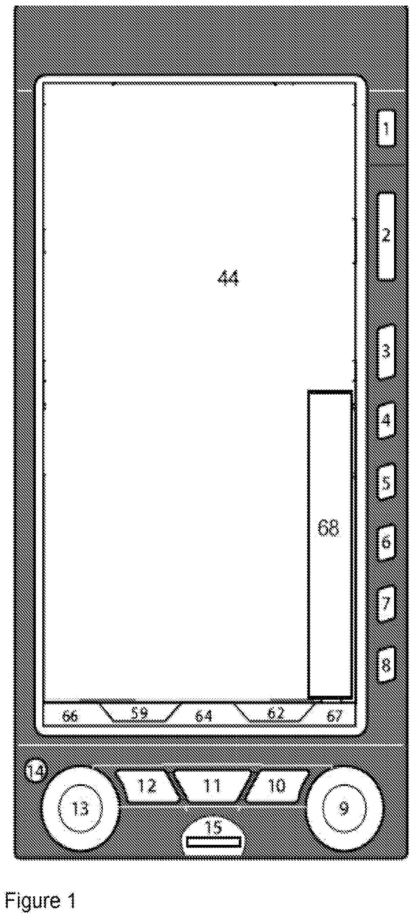

Referring to the accompanying Drawings, Figure 1 represents an exemplary embodiment of the present general inventive concept having a display, screen, and knobs. The general inventive concept provides for a selection of individual elements on a screen 1-44 through the use of two knobs 1-13 and 1-9 and a plurality of buttons 1-1, 1-2, 1-3, 1-4, 1-5, 1-6, 1-7, 1-8, 1-10, 1-11, 1-12, as illustrated in Figure 1. The function of the buttons and the knobs varies depending on which window or page is displayed. The function of the left knob 1-13 is indicated by the label toward the bottom of the screen 1-66. The function of the right knob 1-9 is indicated by the label toward the bottom of the screen 1-67. The function of the left button 1-12 is indicated by the label toward the bottom of the screen 1-59. The function of the center button 1-11 is indicated by the label toward the bottom of the screen 1-64. The function of the right button 1-10 is indicated by the label toward the bottom of the screen 1-62.

Figure 1 also shows five hot keys 1-4, 1-5, 1-6, 1-7, and 1-8 to the right of the screen 1-44 which may be used to toggle various features on and off. The function of each hot key 1-4, 1-5, 1-6, 1-7, and 1-8 is indicated by the label on the screen 1-44 to the left of each button 1-68. Three additional buttons above the hot keys control entering and exiting the main menu 1-3, setting and/or adjusting the map range 1-2, and reversion or manual power control 1-1. Figure 1 also shows an automatic dimming photocell 1-14 and a microSD card slot 1-15.

In the embodiment shown in Figure 1, the display is equipped with several pilot controls designed to simplify operation of the system, minimize pilot workload, and reduce the time required to access functionality. The left knob 1-13 and the right knob 1-9 are both configured such that it may be pushed and/or rotated. Pressing the knob activates it for control, and subsequent presses cycle through its available control functions in a round-robin sequence. In some embodiments, each knob 1-9 and 1-13 has an inactive home state to which it returns automatically after a period of time of inactivity, for example, 10 seconds. The inactive state is designed to prevent inadvertent adjustment of a setting. The knobs may be used to select a different page, window, or view or move horizontally and vertically when panning a map.

In the embodiment shown in Figure 1, rotating the left knob 1-13 selects a different page for display. The initial rotation of the knob activates the selection process, and continued rotation will select different pages. This feature helps to minimize inadvertent page changes. In some functions, for example in map view, pressing the left knob 1-13 activates panning mode. When panning mode is active the left knob 1-13 scrolls horizontally across the map. When in the secondary horizontal situation indicator view the left knob 1-13 performs a sync function for the current course setting. When the info button is pressed, rotating the left knob 1-13 selects different objects on the Navigation Map (Airports/VORs) or METAR, AIRMET/SIGMET, and TFR weather pages. Pressing the left knob 1-13 after the info button has been pressed will display the selected object's textual information, when available.

In the embodiment shown in Figure 1, pressing the right knob 1-9 moves the focus and selects different windows on a page. When a window has focus, rotating the right knob 1-9 changes the view of the window. If the right knob 1-9 is not pushed (to activate window selection) the initial rotation of the right knob 1-9 will activate the selection process, and continued rotation will select different windows. This feature helps to minimize inadvertent page changes.

The right knob 1-9 is also used to back up through multiple information pages. The label push for back displays above the right knob 1-9 when this feature is available. Pushing the right knob 1-9 will back the display out of information and panning, one level at a time, to return to the basic view.

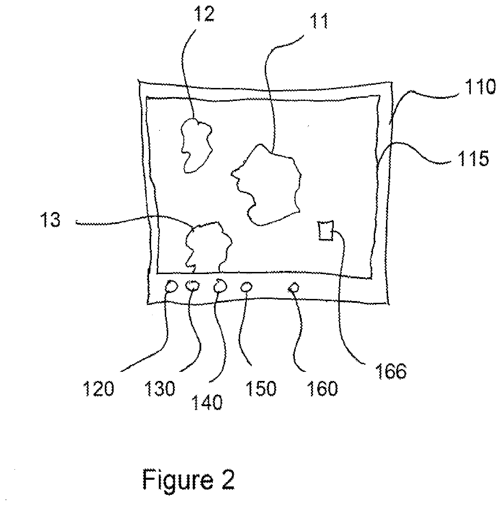

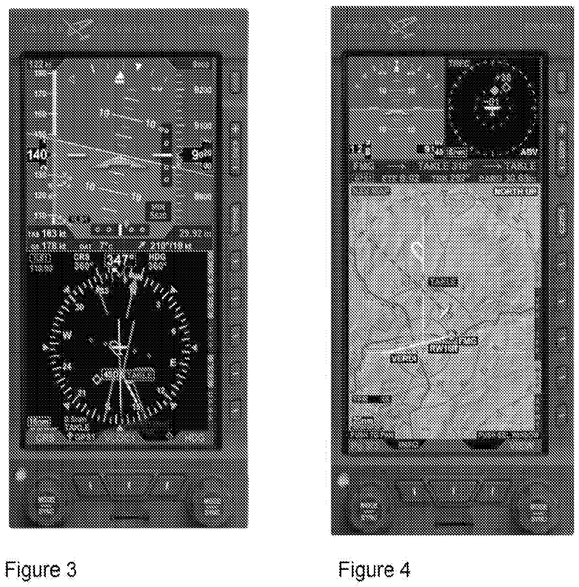

Figure 2 shows another exemplary embodiment of the present general inventive concept having a display, screen, and knobs. Figures 3 shows an embodiment of the present general inventive concept where the avionics display is a primary flight display and includes an attitude display and a navigation display separated by a data bar. Figure 4 shows an embodiment of the present general inventive concept where the avionics display is a multifunction flight display and includes a secondary attitude display at the top left of the screen, a traffic display at the top right of the screen, and a navigation map at the bottom half of the screen.

Referring to Figure 2, the knobs 120, 130 provide movement of the display 115 in vertical, i.e., up and/or down, and/or horizontal dimensions, i.e., left and/or right. For instance, knob 120 may be assigned to control vertical movement and knob 130 may be assigned to control horizontal movement of the display 115.

Once the desired area of display 115 is shown, the selection of the individual components in the selected geographical area is performed by pressing the button 140 to activate a knob 150 that highlights a component 166, such as, an airport, radio, or weather component. The component 166 selected is then highlighted on the screen.

Additional information related to the component 166 may then be selected for display by pushing the left knob 120. The information provided represents all of the information pertinent to the selected component 160. The user can continue to select other component's information by rotating the left knob 120.

The implementation of this method for AIRMETS and SIGMETS starts with a selection key 160 named "Details" on the page used to display these items. When this key is pressed, one of the AIRMETS or SIGMETS symbols or areas on the screen is highlighted.

One of the control knobs is labeled "Select." Turning this knob chooses the next item on the screen and highlights it. The implementation has an intelligent software algorithm that, in one embodiment, selects the items on the screen sequentially from top left to lower right as the selection knob is turned. In another embodiment, the items on the screen are selected sequentially based on their relative distance for the aircraft.

Once the desired item is selected, pressing the knob labeled "Press for Info" brings up a text window with all information for that item displayed in this window. The window also implements a scroll function if the data to be displayed is longer than one page.

The MAP info page function works in a similar fashion to display specific data on screen items such as airports. It has a few enhancements to the original AIRMET, SIGMET page. Once the screen item is highlighted, a small window follows that highlight with some of the most important information for that item displayed immediately.

The full information is still accessed in the same manner by selecting info, bringing up the large text page.

Once the large text page is brought up, display side keys are enabled to allow the user to selectively access specific information about that airport, separately on the screen. For instance, general airport information is displayed by pressing the APT side key. Radio frequencies are displayed using the FREQ side key, etc.

The implementation of this method for METARS has an additional feature. The symbols on the screen that are selected in this method for this page are small. An additional enhancement was made to temporarily enlarge the selected item on the screen to make it more visible. The rest of the detail information is displayed using the same method described above.

The exemplary embodiment of the present general inventive concept is implemented as a software algorithm, e.g., computer readable codes, on a computer readable medium, such as a firmware stored in the memory of the electronic avionics device of Fig. 1, and/or of the electronic avionics devices shown and described in United States Provisional Patent Application Serial Number 61/367,041, entitled "Avionics Display", filed July 23, 2010, or United States Provisional Patent Application Serial Number 61/367,058, entitled "Avionics Display", filed July 23, 2010. For example, the electronic avionics display might include the Electronic Flight Data Display Instrument disclosed in U.S. Patent Application Number 11/773,419. For instance, a setup procedure may be stored in a database such that, upon request by a user, the setup requests assignment information for each of the control buttons 120-160. Depending on the inputted data, the present general inventive concept will assign a function to each of the control buttons 120-160.

A method of displaying information on an avionics device display, which method does not embody the present invention, will now be described. The method allows fully independent operation of multiple windows or "window tiles" through the selection of that tile using a knob selector. Once a window tile is selected by the knob, full functionality associated with that window tile is provided. The application running in the selected window tile can be changed to any window tile application in the system with some exceptions limited by FAA regulations.

The method includes selecting a device display configuration. The device display is capable of being configured to display one or more display tiles simultaneously. By employing object-oriented programming techniques, with each tile representing an independent object, each tile is capable of operating a function, or running an application, independent of other displayed tiles. Each tile is also capable of updating information displayed in real-time. A function or application is associated with each tile displayed in the selected display configuration. Although the figures show options for one, two, or three tiles and a limited number of exemplary functions, or applications, that may be assigned to each tile, one skilled in the art will appreciate that any number of tiles may be employed and any number of applications may be optionally assigned.

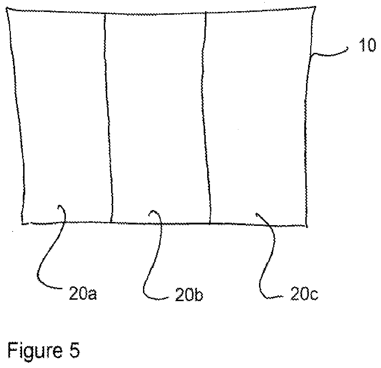

Referring to Figure 5, a set of multiple screen layouts in a display 5-10 may be provided. In this example, each screen layout has 1, 2 or 3 windows or tiles, e.g., for example, the display 5-10 has 3 tiles, 5-20A, 5-20B, and 5-20C. It is foreseen, however, that other combinations can be used depending on screen size. In other words, a larger screen will accommodate more tiles. The screen can be set during an initial setup procedure to display more tiles if the display is larger or to display fewer tiles if the display is smaller.

Methods may be provided to navigate between screens, windows, select functions within each window, and control those functions for each window, using the knobs and buttons, as described above. Multiple screen layouts that a user can select may be provided.

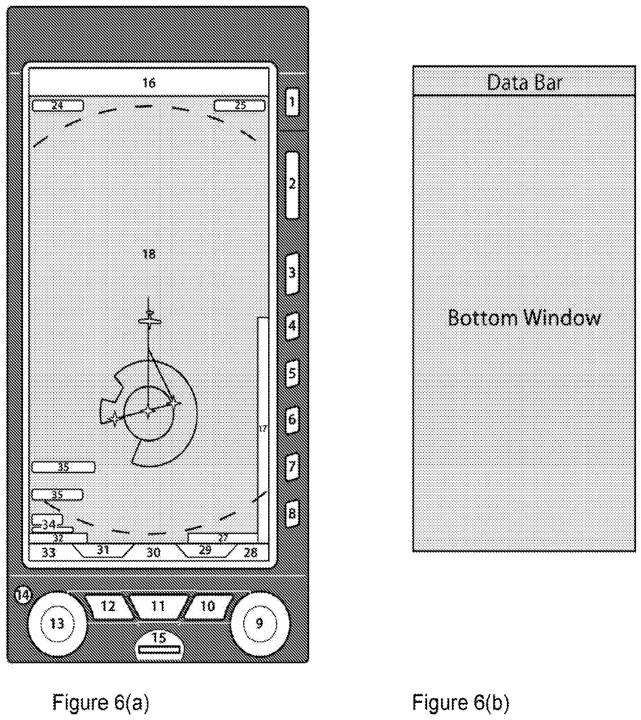

In Figure 6(a) and (b), a single window full-screen layout fills the entire screen of the display. This window may be used to display one of the following views: Navigation Map (NAV MAP), Terrain (TERR), Traffic (TRFC), Lightning Sensor (STRIKES), Data Link Weather (WEATHER), or others.

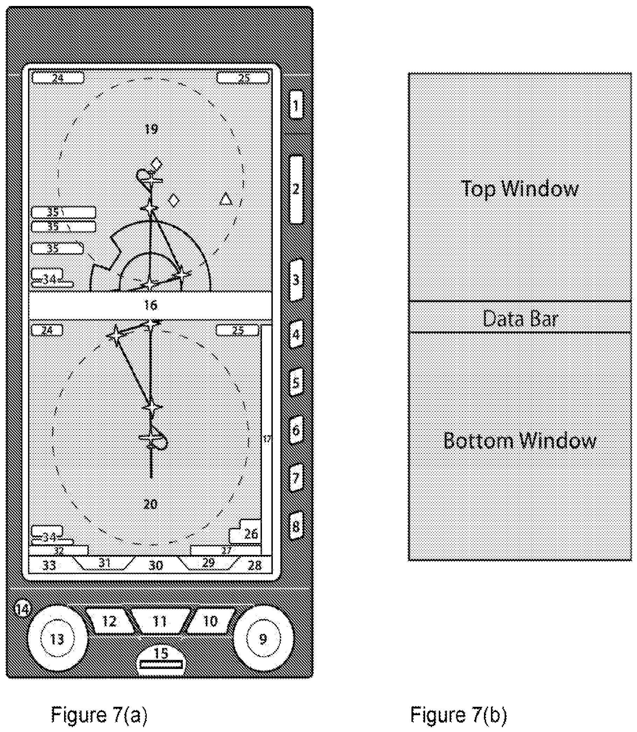

In Figure 7(a) and (b), the display includes a two window, split screen layout. In Figure 7(a), the VFR navigation map view is displayed in the top window with the dedicated terrain view displayed in the bottom window. The top window may be used to display one of the following views: Terrain (TERR), Traffic (TRFC), Lightning Sensor (STRIKES), or others. The bottom window may be used to display one of the following views: Navigation Map (NAV MAP), Terrain (TERR), Traffic (TRFC), Lightning Sensor (STRIKES), Data Link Weather (WEATHER), Secondary HSI, or others.

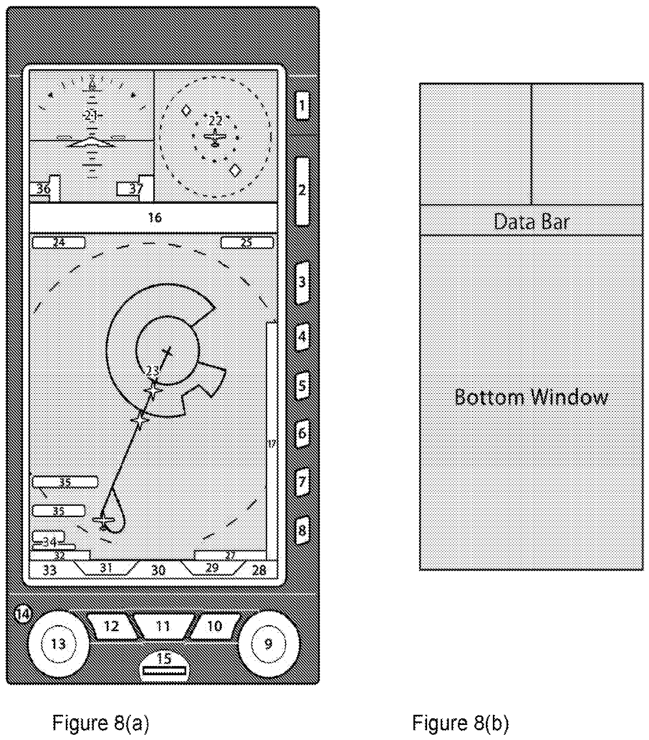

In Figure 8(a) and (b), the display includes a three WINDOW, Thumbnail LAYOUT. In Figure 8(a), the Secondary Attitude Indicator VIEW is displayed in the top left WINDOW, Dedicated Terrain VIEW in the top right WINDOW, and VFR Navigation Map VIEW in the bottom WINDOW. The top left window may be used to display one of the following views: Terrain (TERR), Traffic (TRFC), Lightning Sensor (STRIKES), Secondary Attitude Instrument, or others. The top right window may be used to display one of the following views: Terrain (TERR), Traffic (TRFC), Lightning Sensor (STRIKES), or others. The bottom window may be used to display one of the following views: Navigation Map (NAV MAP), Terrain (TERR), Traffic (TRFC), Lightning Sensor (STRIKES), Data Link Weather (WEATHER), or others.

Different shaped markers on an altitude tape found on a Primary Flight Display (PFD) and/or Multifunction Flight Display (MFD) of an aircraft may be provided according to another method which does not embody the present invention. The markers operate in unison to provide the pilot data at, for example, 500 feet, 200 feet, and the pilots desired or "target" altitude.

A target altitude is input into the device. The target altitude is stored in a database. One or more alert altitudes are calculated based on predetermined deviations from the target altitude that has been inputted into the device and stored in the database. One or more marker corresponding to the alert altitude(s) are displayed.

In some examples, the markers are displayed on an electronic avionics device display screen. In some examples, the markers are displayed so as to correspond to an electronic altitude tape. In some examples, the predetermined deviations are stored in a database. In some examples, a user can modify the predetermined deviations, thus selecting his or her own alert markers. In some examples, the predetermined deviations are preset and cannot be modified. For example, and not by way of limitation, one example includes a predetermined deviation (and alert marker) preset at 500 feet above the target altitude. In another example, a predetermined deviation (and alert marker) is preset at 200 feet above the target altitude. In one embodiment, the general inventive concept includes only one marker corresponding to only one alert altitude.

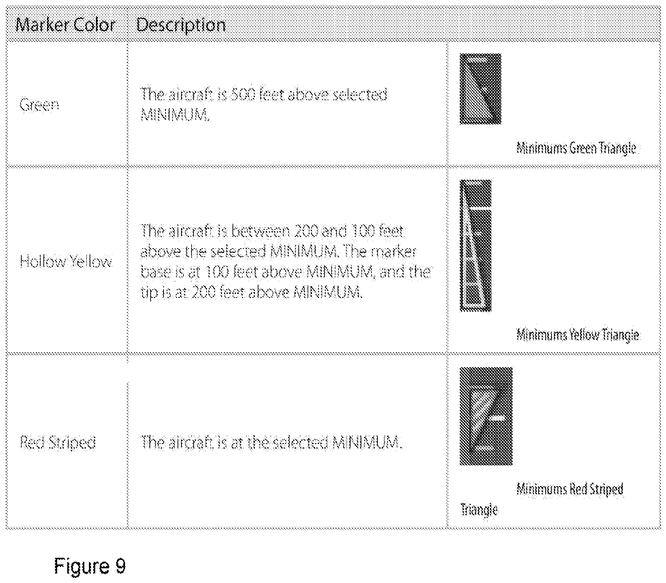

Referring to the Table in Figure 9, a 500 foot marker (green marker), 200 foot marker (yellow marker), and target marker (orange or red/yellow striped marker) are provided, by way of example.

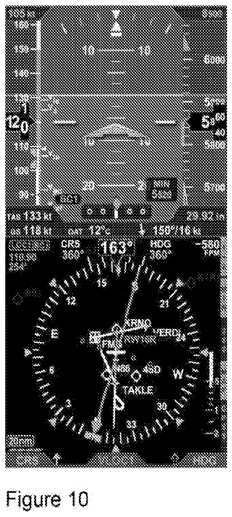

Referring to Figure 10, a PFD is shown with the altitude tape along the right side of the top window. The target (minimum) altitude in the example shown in Figure 10 is 5520 feet.

Figure 10 shows a marker (green triangle) at 500 feet above the target (6020 feet) toward the top of the altitude tape. Figure 10 also shows top of a second marker (top of a hollow yellow triangle) at 200 feet above the target (5720 feet) and the triangular marker would extend down to 100 feet above target (5620 feet). Not shown in Figure 10, a third marker (orange or yellow/red striped triangle) would be included at the target (minimum) altitude of 5520 feet.

The markers or cues may be of different shape and/or color displaced from the target altitude based on the importance of the reference altitude, for example, enroute level, approach minimums, and the like. In one example, the marker extends along a range of altitude that includes the alert altitude. In one example, the marker extends along a range from 200 feet above the target altitude to 100 feet above target altitude. In one example, the marker is a gradient, or triangle, to become more apparent to a user as the target altitude draws nearer. In one example, one of the markers corresponds to the target altitude on the electronic altitude tape.

One skilled in the art will appreciate that many different markers are possible. For example, the marker could include an audible alert, like a tone or an alarm bell. The marker could include a visual alert, like a flashing light. The marker could include both an audible and visual alert, together.

The method may be implemented as a software algorithm, e.g., computer readable codes, on a computer readable medium. For instance, the target markers and shape, color, outlined, solid, ghost, transparency, and/or other like characteristics thereof, may be stored in a database such that, upon request by a user, the setup requests information related to target altitude. Depending on the inputted data, the target marker and characteristics thereof to display on a screen will be determined.

An avionics device display which does not embody the present invention will now be described. The avionics device display has multiple levels of terrain database resolution with smooth transition from one range displayed on a device display screen to a second range displayed on a device display screen. In one example, the location of the aircraft is tracked utilizing a global positioning system (GPS) and updated regularly, preferably about every 5 minutes. Multiple levels of terrain database resolution are stored in a database. The terrain database resolution database may be stored on a removable SD memory card located in a card slot of the device. When the location of the aircraft is updated, specific data from the terrain database resolution database is retrieved and stored in random access memory (RAM).

All topographic data required to fill the display screen, from a database for each of the settings for each resolution, may be stored in RAM. The data retrieved from the terrain database resolution database and stored in RAM is based on the location of the aircraft and limited in range (i.e. distance from the aircraft). Depending on the level of terrain database resolution, a greater or lesser range of data is retrieved and stored in RAM. A higher terrain database resolution data set will be retrieved for a shorter range (i.e., zoomed in) and a lower terrain database resolution data set will be retrieved for a larger range (i.e., zoomed out). When data from the terrain database resolution database is retrieved and stored in RAM, data is retrieved relating to everyone of the multiple levels of terrain database resolution, each level including a different range. Thus, at any given time, the RAM will store terrain data in concentric circles around the location of the aircraft, with the highest resolution data being the terrain data concentric circle closest to the location of the aircraft and the lowest resolution data being the terrain data concentric circle farthest from the location of the aircraft. As the location of the aircraft changes over time, the data stored on RAM is discarded and/or replaced by updated terrain data from the terrain database resolution database.

Terrain information is displayed on the device display. Terrain data of one range and level of resolution from RAM is provided to a graphics processor. Which level of resolution and range is provided to the graphics processor is determined based upon screen size, screen shape, range to be displayed on the screen, and other factors. The graphics processor processes and optimizes (shrinks, expands, extrapolates, or otherwise) the data for display based on screen size, shape and other factors. For example, if the range to be displayed on the screen is very tight or very close to the location of the aircraft, then the highest level of terrain resolution and shortest range of terrain data is used. On the other hand, if a large range is to be displayed on the screen, then a lower level of terrain resolution and longer range of terrain data is used. For example, there may be five (5) levels of resolution of 300, 90, 30, 9, and 3 arc-second and each of these levels of resolution may be keyed to the level of range on the screen.

When zooming between ranges, smooth transition to higher resolution from a lower resolution, and/or vice-versa, i.e., from lower resolution to higher resolution, may be created, instead of a step jerk function. The smooth transition is provided for a number of display features, including terrain, on the screen, rather than just jumping to the next range. In other words, as terrain is displayed and being viewed in a first screen resolution by a user, the user may desire to view the terrain in a higher screen resolution and switches a controller to select and transition to a higher screen resolution.

To transition between ranges displayed on the device display (i.e., to zoom in or out), the present general inventive concept implements a smooth zoom function. The smooth zoom function increases (or decreases) the range displayed on the screen using gradually increasing or decreasing increments. The topographical resolution part of the algorithm switches from one terrain database resolution database to the next (up or down, depending on whether zooming in or out) instantly and dynamically at some point during the transition, if necessary for optimal graphics display. The incremental range increases (or decreases) change as a decay filter function over a constant time interval. For example, if the incremental range increase (or decrease) is constant over time (i.e., increases or decreases by 1 nautical mile every second), then the decay filter function is linear. In other examples, the incremental range increase (or decrease) is exponential or double exponential over constant time. For instance, if a user begins at a fixed range setting of 10nm and increments the range through the next 2 fixed settings, 15nm and 20nm, it will increment from 10nm to 20nm smoothly in small steps of 1nm initially and several nm/sec as it approaches the 20nm screen resolution. The topographical resolution part of the algorithm will switch from 3 arc seconds terrain database resolution to 9 arc seconds terrain database resolution instantly when the range passes through 16nm. The transition appears as a smooth zoom to the user.

Terrain data stored in RAM is centered at the location of the aircraft, plus a buffer amount around the edges of the screen to allow the aircraft to move at maximum certified speed for its equipment and provide a sufficient amount of time to extract the next set of topographical data from the database. A map panning feature is also included in one example such that the terrain database resolution data stored in RAM is based on coordinates provided by a user, rather than on the location of the aircraft. Coordinates are provided either manually by entering specific coordinates; by panning the location of the map on the display screen; or by other known or hereinafter discovered methods.

The advantage of this algorithm is that it is very memory efficient and uses only the memory required to store what is necessary to be displayed at all ranges. The alternative would be to have all resolutions of topographical data for the whole Earth pulled and in graphics memory, and just to access and display what is selected. This is not practical in embedded avionics systems.

In avionics, size, power, weight, and processing speed are critical. It is desirable to provide elements having the least weight, consume the least power, and generate and display data immediately or at least within a short amount of time so that a pilot is supplied with necessary information as required. Embedded hardware and software systems used in avionics do not have the benefit of large amounts of memory and processing power as desktop computers do. In addition, the data must be displayed without much delay to the cockpit crews.

The terrain resolution database, from which data is retrieved and temporarily stored in RAM, is stored on a removable memory device, such as an Secure Digital (SD) memory card, in one embodiment. In other embodiments, the terrain database is stored on an internal hard drive or other non-removable memory device; other hardware external to, but operably connected to, the avionics device; or received via transmission, such as XM satellite.

Another apparatus which does not embody the present invention, and provides a display connected to a controller of an avionics device (or the like) and a graphics processor including alpha blending properties, will now be described.

The alpha blending properties of the graphics processor enable dimming of the display via effectively darkening the display with neutral color overlays beyond the last hardware dimming step.

In other words, the apparatus permits dimming of a display past the lowest dim setting of other hardware to which the display is connected. At the same time, the apparatus reduces display glare and/or permits display dimming without changing the colors of items being displayed.

The apparatus may be implemented as a software algorithm, e.g., computer readable codes, on a computer readable medium, such as a firmware stored in the memory of the electronic avionics device of Fig. 1. For instance, the alpha blending properties of the device shown in Fig. 1 are stored in a database such that, upon request by a user, or upon a request by an auto-diming subroutine, for dimming of display 44, the graphic processor extracts one of a plurality of blending options stored in the database and generates an appropriate display of data that is dimmer than display of the data prior to the request.

As mentioned above, Figure 1 shows an avionics device having a display, screen 44, knobs 9, 13 and buttons 1, 2, 3, 4, 5, 6, 7, 8, 10, 11, 12 to control various functions of the device, including, but not limited to the brightness of display screen 44. The device of Fig. 1 includes five hot keys 4, 5, 6, 7, and 8 to the right of the screen 44 which may be used to toggle various features on and off. The function of each hot key 4, 5, 6, 7, and 8 is indicated by the label on the screen 44 to the left of each button at location 68. Three additional buttons above the hot keys control entering and exiting the main menu 3, setting and/or adjusting the map range 2, and reversion or manual power control 1. The device of Fig. 1 also includes an automatic dimming photocell 14 and a microSD card slot 15.

In the example shown in Fig. 1, display screen 44 is a backlit LCD. In one such embodiment the backlight scheme utilizes one or more LED's. The LED(s) includes an LED driver to power the backlight hardware that includes a dynamic range of brightness including a maximum brightness level and a minimum brightness level. The minimum brightness level represents a brightness created by use of a generally minimum amount of power required to drive the LED(s) used in the LCD backlight. The dynamic range of brightness of the hardware can be controlled by one or more of the buttons or knobs on the avionics device of Fig. 1 that provide input to a processor of the device that controls hardware brightness (e.g. by controlling power level to the backlight), and/or can also be controlled automatically by an auto-dimming subroutine that is stored in the firmware of the device and is accessed by a control processor of the device to control brightness of the display. The control processor of the device is operably connected to screen 44 of the device to control the backlight brightness level and/or power supplied to the backlight driver and to the photocell 14 to provide data input to the control processor regarding ambient light conditions surrounding the device. The control processor utilizes the ambient light data in the auto-dimming subroutine to automatically adjust the brightness level of the backlight based upon a hardware target brightness level value stored in a database accessible by the processor that corresponds to an ambient light value measured by photocell 14. It will be appreciated that the hardware target brightness level value associated with a specific ambient light value in the database may be values preprogrammed into the device, or alternatively may be stored in the database via input from the user. In one preferred embodiment, the hardware target brightness level values are generated by a subroutine in the processor based upon a user's selection of a preferred brightness level for a specific ambient light value. In such an embodiment, the subroutine stores the preferred brightness level value for the specific ambient light value in the database and utilizes that preferred brightness level value to populate preferred brightness level values for all other ambient light values by either increasing or decreasing the preferred brightness level value by an amount proportional to the change in ambient light value.

In the avionics device discussed above with respect to Fig. 1, the minimum brightness level that may be obtained by the backlight hardware of the device may be stored in a database accessible by the control processor of the device. In the auto-dimming example, the database is the same database in which preferred brightness level values are stored. In another example, a separate database is utilized for storing the minimum brightness level. Once the hardware target brightness level reaches the minimum brightness level obtainable by the backlight, and further brightness reduction is requested (either by the auto-dimming subroutine or through user input via one or more of the buttons/knobs, the processor activates the graphics processor to further reduce the brightness level of the display. It will be appreciated that the graphics processor and device processor may be multiple subroutines of a single processor hardware component, or alternatively may be multiple hardware components.

The brightness level of the display is reduced below the minimum brightness level obtainable by the hardware via a neutral color (such as black, gray, brown, etc. - preferably a color that generally filters all colors of light) translucent overlay (foreground) that is combined with the background image of the avionics information displayed by the device of Fig. 1 (e.g. Navigation Map (NAV MAP), Terrain (TERR), Traffic (TRFC), WX-500 (STRIKES), Data Link Weather (WEATHER), Secondary HSI, or others) utilizing an alpha bending process subroutine of the graphics processor. The neutral color overlay utilizes the same color across every pixel of display 44 for a given brightness level, such that the brightness level is reduced below the minimum hardware brightness level by a consistent amount across the entire screen. The graphics processor accesses a database of stored opacity (or transparency) values for the neutral color overlay that corresponds to the brightness level requested by the user input (via control knobs/buttons) or by the auto-dimming subroutine. As the requested brightness level goes below the minimum hardware brightness level, the opacity of the overlay is interatively increased from 0% to 100% (or translucency is interatively decreased from 100% to 0%) across the entire display 44 and alpha blended with the background image. As the opacity of the overlay increases, the brightness level output from the display 44 decreases, while the brightness level of the backlight remains unchanged. Brightness level is increased by decreasing the opacity.

The apparatus may be implemented as a software algorithm, e.g., computer readable codes, on a computer readable medium, such as on firmware of the avionics device discussed above. Various other examples can be embodied as computer readable codes on a computer readable medium and/or computer readable recording medium (collectively "computer readable recording medium" hereafter). The computer readable recording medium may include any data storage device suitable to store data that can be thereafter read by a computer system. Examples of the computer readable recording medium include, but are not limited to, a read-only memory (ROM), a random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Various other examples may also be embodied in hardware or in a combination of hardware and software. Although described herein in connection with an avionics device, it will be appreciated that the apparatus may also be embodied in any device that utilizes a display in which display brightness is adjusted, including but not limited to backlit displays such as LCD displays (including any type of backlighting scheme), LED displays, CRT's, etc. Furthermore, it will be appreciated that although in the example described herein the varying neutral color overlay brightness control aspect is utilized in combination with a hardware brightness (e.g. backlight brightness of an LCD) control, the varying neutral color overlay brightness control may, and in certain examples does, function as the sole brightness control for the device. Further still, it will be appreciated that although in the example described herein the varying neutral color overlay brightness control aspect is initiated after a minimum hardware brightness level has been obtained, the varying neutral color overlay brightness level may be, and in some examples is, initiated between hardware brightness dimming steps as a smooth brightness dimming transition between levels of brightness that are obtainable by the hardware.

Another example which does not embody the present invention provides systems and methods that relate to a reversionary or backup architecture for electronic primary flight displays, or an equivalent level of safety.

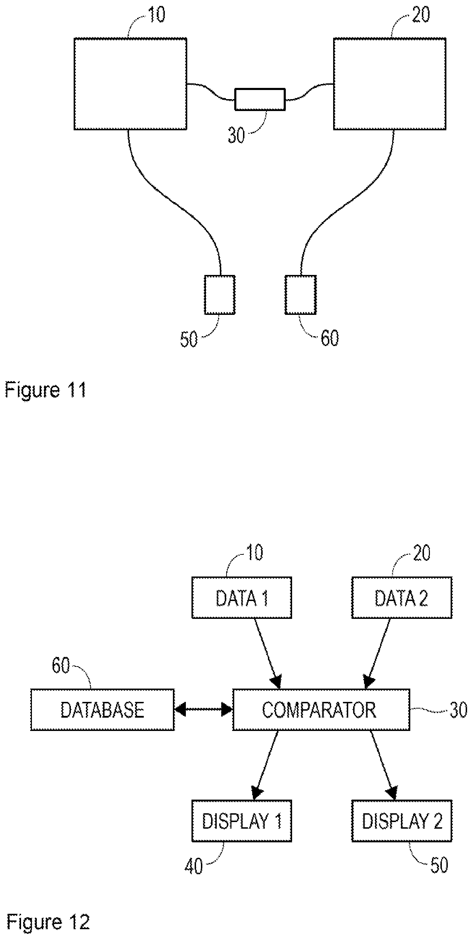

Referring to Figure 11, a system having two electronic displays 10, 20 that operate identical hardware and software is provided, where the function of the display can be configured at installation, and where each display has both an integral air data computer and an attitude heading reference computer ("attitude computer"), or is connected to external air data and attitude computer(s). Preferably, one of the two displays 10, 20 is configured as a primary flight display and the other is configured as a Multi Function Display (MFD). For example, the electronic avionics display might include the Electronic Flight Data Display Instrument disclosed in U.S. Patent Application Number 11/773,419. It will be appreciated that the air data computer and attitude heading reference computer for each display may be integrated together into each separate display, or may be separate independent computers utilized by each display. Furthermore, it will be appreciated that a single computer processor may be utilized for each display that performs the functions of both computers, and or other processor functions that may be necessary for operation of said display. Other independent computers, processors or other hardware (independent for each processor) may be utilized in combination with separate air data and attitude computers for performing other functions of each display. Furthermore, in some examples, the air data computer and the attitude computer of each display comprise subroutines or functions performed by a single processor.

When configured as a primary flight display, there is a single operating mode. When configured as a Multi Function Display, there are at least two operating modes, one of which is as a Primary Flight Display accessible either via a single pilot action or via automatic transition.

The two displays 10, 20 intercommunicate with one another via a communications connection 30 to share essential information, such as pilot settings and unit health, or other data or information that may be determined or obtained by one display and usable by the other display. This connection may be by a wired or wireless data communication, and may use industry standard interfaces such as RS232, ARINC 429, USB, Ethernet, Bluetooth, 802.11, etc. Data exchange can include, but is not limited to, items such as unit heath, failures, pilot configured display settings, heartbeat, etc. The displays 10, 20 installed in the aircraft allow the removal of redundant mechanical instruments typically required by regulation. The MFD display that provides the backup capability need not continuously display primary flight information so long as that information remains accessible via a single pilot action.

Each display 10, 20 is powered by a power source 50, 60 independent from the other. For example, a first display 10 is configured as a PFD and is powered by a first power source 50 and a second display 20 is configured as a MFD (with reversionary PFD backup capability) and is powered by a second power source 60, and the first power source 50 is independent of the second power source 60. In one example, this is accomplished using a dedicated external battery 50, 60 that is charged by a display head. In a second example, this would be accomplished using a different aircraft alternator or generator powering a different electrical bus. In yet a third example, this may be accomplished by operating from an emergency bus and battery powered by a single alternator or generator that can be isolated from the aircraft primary bus.

The independent power sources, and other hardware (i.e. air data computer and attitude computer) for each display, allows the displays to operate independent of one another, such that neither display depends upon the other display to perform critical functions. If one display goes out, the other one is unaffected. Notwithstanding, it will be appreciated that information/data and/or other resources may be shared between both displays when both displays are functioning properly. If the attitude and heading reference system of one of the displays fails, the other attitude and heading reference system of the other display is unaffected. In some examples, if the attitude and heading reference system of the MFD fails, the MFD can use heading data for non-critical functions from the PFD. In some such examples, if the attitude and reference heading system of the PFD fails, the MFD will go into reversionary mode.

In some examples, an input device is provided to change the configuration of the display from a MFD to a PFD. For example, the input device could be a dedicated button or a hot key button. In this manner, a single pilot action, pressing the button, would provide immediate reversion to the PFD, thus satisfying FAA requirements.

In some examples, the communications connection 30 communicates the status of each display (or is used to transmit the status of each display or detect the absence of a status message from one display to another display). In the event that the PFD fails, information from the PFD is communicated (or information that is communicated to confirm proper function ceases to communicate) via the communications connection 30 to the MFD which uses such information, or lack of information to make a determination to automatically revert to the PFD configuration (if the MFD is programmed to do so). In some examples, the MFD and PFD include identical software in which configuration software for each device tells or instruction the device on boot up to operate either as an MFD or a PFD, and if as an MFD whether to operate with or without a reversion mode. In preferred devices in which the MFD may revert to a PFD (either automatically, or manually), upon reversion, the MFD become a mirror of the PFD display and in how in interfaces with other equipment on the airplane.

In one configuration, where the multi-function display requires pilot action to switch to a primary flight display, a third independent attitude instrument may be retained to ensure that information needed for safe operation is available without pilot action. This configuration offers the advantage of providing relief from the regulatory requirement to configure the multifunction display as a primary flight display prior to entering critical phases of flight, thereby allowing the multifunction display to continue to operate as such during those flight phases.

In another configuration where the multi-function display can automatically switch to a primary flight display after detecting a failure of the display configured as a primary flight display then a third independent attitude instrument is not installed.

In yet another configuration a third independent attitude indicator is not required and a pilot action is required to switch the multifunction display to a primary flight display. In each configuration the redundant airspeed and altitude instruments typically required by the regulation is not installed.

The system may be implemented as a software algorithm, e.g., computer readable codes, on a computer readable medium such as firmware of an electronic avionics display. For instance, a setup procedure may be stored in a database such that, upon request by a user, the setup requests information permits a user to assign a function to the displays 10, 20. Depending on the inputted data, a function will be assigned to one or both of the displays 10, 20.

To assure the integrity of the system, adequate redundancy, and reliability of the flight data used, some examples are operably connected to two pitot pressure systems, each operating independent of the other, thus assuring at least one reliable source of pitot pressure system data in the event of a single pitot system failure. In other examples, flight data displayed on one or both of the displays 10, 20 is derived from a single pitot pressure system, thus calling into question the integrity of the system and the flight data relied upon therein. For examples employing a single pitot pressure system, the variations and sub-combinations described below are recommended to provide adequate redundancy and backup. Nevertheless, it will be appreciated that some examples employing a single pitot pressure system will utilize the variations and sub-combinations described above with respect to Fig. 11 without utilizing the variations and sub-combinations described below with respect to Fig. 12.

Systems and methods may be provided whereby obstruction or failures of an unreliable aircraft pitot pressure sensing system (including pitot tube or static pressure tube) is detected, using independent dissimilar information, and corrected, enabling the use of aircraft pitot information to perform critical flight functions. Multiple dissimilar sensor inputs are employed to compute critical flight parameters or schedule the performance or operation of critical flight systems. One example of a critical function performed in a light aircraft is the computation and display of aircraft attitude.

Modern certification rules pertaining to electronic flight displays require that at least two sources of attitude information be installed such that one reliable display of attitude data remain available following any single failure in the aircraft, and that a single failure cannot present simultaneous misleading data on more than one display.

Modern low cost attitude heading reference systems employ a mathematical process by which attitude is derived using a combination of low cost sensor data, including information from an aircraft pitot sensor. To install more than one such attitude sensing platform requires that a means be implemented to ensure that no single failure can result in either the loss of all attitude data, or present misleading data on more than one display.

In the case of pitot data, most light aircraft only include a single pitot system, as it is cost prohibitive to add a second pitot system. Larger aircraft that rely on pitot data for critical systems will typically be certified with two, or three, independent pitot systems, adding cost and complexity to their designs, which can be more easily absorbed in the overall costs associated with such larger aircraft. In single-pitot systems, ensuring that a single failure does not result in loss of attitude data, or presenting misleading data requires a means be developed to detect critical failures of the single-pitot sensing system, such as may occur in flight due to an inadvertent¹ encounter with in-flight icing conditions.

In examples described below information from a device that measures the aircraft ground speed, such as a GPS receiver (or Inertial Navigation System, Doppler radar system, or similar) is compared. The aircraft ground speed is compared to and correlated with the pitot pressure and/or air-speed to determine if the pitot pressure (or static pressure of the pitot system) has been corrupted. When the monitor determines that the pitot (or static) pressure is corrupted, downstream critical systems that rely on correct pitot pressure are advised of the potentially corrupted data so that they can, as appropriate, be flagged as invalid or transition into a fail-safe operating mode.

Groundspeed is compared to the computed indicated airspeed to determine if the aircraft is airborne according to one data type, yet not airborne according to the other data type. Under these circumstances the pitot data is flagged as invalid as previously described.

For example, in the case of a multiple ADAHRS architecture where the attitude solution is dependent on reliable airspeed data input, a sensed failure or degradation of the pitot input can be, and in certain examples is, used to flag the attitude solution as invalid or "fail-hard." In this manner, two displays of misleading attitude are not simultaneously presented to the pilot.

In another example, the attitude solution is capable of transitioning to an alternate aiding source, such as substituting the critical airspeed input with a surrogate for airspeed, such as independently derived aircraft groundspeed, i.e., "fail-soft."

Yet another example substitutes a fixed airspeed input into the ADAHARS solution as a surrogate for actual airspeed. In this case, the fixed airspeed value is selected in such a manner to ensure that any degradation of attitude system performance was not unsafe, e.g., "fail-fixed," "fail-safe."

Other examples may be used to detect and mitigate the effect of a failed airspeed input to other critical flight systems, for example envelope protection systems (e.g., stick shaker,
¹ Most pitot tubes include heaters to prevent ice from forming and blocking the pitot tube. Nevertheless, pilots often forget to turn on the heaters in potential icing situations and ice forms. Upon activation of the heater, assuming the heater has not failed, the ice melts and normal system operation is restored.
pusher, rudder boost, etc.) artificial feel systems, flap actuator scheduling systems, trim actuator scheduling systems, autopilot gain scheduling systems, and/or FADEC control scheduling systems.

In use, as illustrated in Figure 12, a first data 10 and a second data 20 that is dissimilar from the first data 10 is transmitted to a comparator 30. In one example, all data goes through the comparator 30 before being used by critical systems. In such an example, all critical systems are downstream of the comparator. In another example, data is fed to the critical systems and comparator 30 in parallel.

The comparator 30 is connected to database 60 such that first data 10 and second data 20 can be categorized and compared against each other and ideal data, which is stored in the database 60. The comparator 30 compares the first data 10 to the second data 20 to determine whether either the first data 10 or the second data 20 is corrupt. If one of the first data 10 or the second data 20 is corrupt, the comparator may alter the corrupt data, provide a notification to a user that the data may be corrupt, or cause the other systems that use the data to enter in a fail-hard, fail safe or fail-fixed state. For example, in some examples in which all data goes through the comparator prior to being provided to critical systems, the comparator will alter the corrupt data. In other examples in which data is provided to comparator 30 and the critical systems in parallel, the comparator will cause the systems that use the data to enter in a fail-hard, fail safe or fail-fixed state (i.e. the comparator takes action to mitigate the effect of failed airspeed input). It is foreseen that the notification may be displayed on either a first display 40 or second display 50.

Examples of the above system may be implemented as a software algorithm, e.g., computer readable codes, on a computer readable medium. Various other examples can be embodied as computer readable codes on a computer readable medium and/or computer readable recording medium (collectively "computer readable recording medium" hereafter). The computer readable recording medium may include any data storage device suitable to store data that can be thereafter read by a computer system. Examples of the computer readable recording medium include, but are not limited to, a read-only memory (ROM), a random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Various examples may also be embodied in hardware or in a combination of hardware and software.

Whilst the present general inventive concept has been shown in the drawings and fully described above with particularity and detail in connection with what is presently deemed to be the most practical and preferred embodiment(s) of the invention, it will be apparent to those of ordinary skill in the art that many modifications thereof may be made without departing from the principles and concepts set forth herein, including, but not limited to, variations in size, materials, shape, form, function and manner of operation, assembly and use.

## Claims

1. A method of displaying information on an avionics device display (44), said method comprising the steps of:
displaying selectable aeronautical and weather items on the device display, said items including information relating to said items;
maintaining a dynamically variable database of selectable aeronautical and weather items accessible by a control processor of the device;
updating the database dynamically to include selectable aeronautical and weather items only within a predetermined area;
updating the predetermined area dynamically;
enabling selection of aeronautical and weather items of the dynamically variable database in a sequential manner;
selecting a desired aeronautical or weather item; and
displaying information relating to said selected aeronautical or weather item, wherein said information is derived from a source stored internally within said avionics device or selected from the group comprising: Navigation Map (Airports, controlled airspace, special use airspace, navigation aids, cultural features, geographic features), METAR, AIRMET/SIGMET, and TFR weather pages.

2. The method of claim 1, wherein the updating the database dynamically excludes items outside of said predetermined area.

3. The method of claim 1, wherein said predetermined area corresponds to a viewable area on said device display.

4. The method of claim 1, wherein said predetermined area corresponds to location of said display device.

5. The method of claim 1, wherein the updating the database includes modifying one or more of said selectable items or said information relating to said selectable items.

6. The method of claim 1, wherein the updating the database includes removing one or more of said selectable items or said information relating to said selectable items.

7. The method of claim 1, wherein the updating the database includes adding one or more of said selectable items or said information relating to said selectable items.

## Patentansprüche

1. Verfahren zum Anzeigen von Informationen auf einem Avionik-Anzeigegerät (44), wobei das Verfahren folgende Schritte umfasst:
Anzeigen auswählbarer Luftfahrt- und Wetterelemente auf dem Anzeigegerät,
wobei die Elemente Informationen in Bezug auf die Elemente beinhalten;
Unterhalt einer dynamisch variablen Datenbank von auswählbaren Luftfahrt- und Wetterelementen, auf die ein Steuerprozessor des Geräts zugreifen kann;
dynamisches Aktualisieren der Datenbank, um auswählbare Luftfahrt- und Wetterelemente nur innerhalb eines vorgegebenen Bereichs einzubeziehen;
dynamisches Aktualisieren des vorbestimmten Bereichs;
Ermöglichen einer Auswahl von Luftfahrt- und Wetterelementen der dynamisch variablen Datenbank in sequentieller Art und Weise;
Auswählen eines gewünschten Luftfahrt- oder Wetterelements; und
Anzeigen von Informationen in Bezug auf die genannten ausgewählten Luftfahrt- oder Wetterelemente, wobei die genannten Informationen von einer Quelle abgeleitet sind, die intern im genannten Gerät gespeichert oder aus der Gruppe ausgewählt ist, die aus: Navigationskarte (Flughäfen, kontrollierter Luftraum, Luftraum mit besonderer Nutzung, Navigationshilfen, kulturelle Merkmale, geografische Merkmale), METAR-, AIRMET-/SIGMET- und TFR-Wetterseiten besteht.

2. Das Verfahren gemäß Anspruch 1, wobei die Aktualisierung der Datenbank Elemente außerhalb des vorbestimmten Bereichs dynamisch ausschließt.

3. Das Verfahren gemäß Anspruch 1, wobei der vorbestimmte Bereich einem sichtbaren Bereich auf dem Anzeigegerät entspricht.

4. Das Verfahren gemäß Anspruch 1, wobei der vorbestimmte Bereich einer Position auf dem Anzeigegerät entspricht.

5. Das Verfahren gemäß Anspruch 1, wobei die Aktualisierung der Datenbank das Modifizieren eines oder mehrerer der auswählbaren Elemente oder der Informationen in Bezug auf die auswählbaren Elemente umfasst.

6. Das Verfahren gemäß Anspruch 1, wobei die Aktualisierung der Datenbank die Entfernung eines oder mehrerer der auswählbaren Elemente oder der Informationen in Bezug auf die auswählbaren Elemente umfasst.

7. Das Verfahren Anspruch 1, wobei die Aktualisierung der Datenbank das Hinzufügen eines oder mehrerer der auswählbaren Elemente oder der Informationen in Bezug auf die auswählbaren Elemente umfasst.

## Revendications

1. Un procédé d'affichage d'informations sur un afficheur de dispositif avionique (44), ledit procédé comprenant les étapes consistant à :
afficher des éléments aéronautiques et météorologiques sélectionnables sur l'afficheur du dispositif, lesdits éléments comprenant des informations relatives auxdits éléments ;
maintenir une base de données variable dynamiquement d'éléments aéronautiques et météorologiques sélectionnables accessibles par un processeur de contrôle du dispositif ;
mettre à jour la base de données dynamiquement afin d'inclure des éléments aéronautiques et météorologiques sélectionnables uniquement à l'intérieur d'une zone prédéterminée ;
mettre à jour la zone prédéterminée dynamiquement ;
permettre la sélection des éléments aéronautiques et météorologiques de la base de données variable dynamiquement, de manière séquentielle ;
sélectionner un élément aéronautique ou météorologique souhaité ; et
afficher des informations relatives audit élément aéronautique ou météorologique sélectionné, dans lequel lesdites informations proviennent d'une source stockée à l'intérieur dudit dispositif avionique ou sélectionnée dans le groupe comprenant :
carte de navigation (aéroports, espace aérien contrôlé, espace aérien à usage spécial, aides à la navigation, caractéristiques culturelles, caractéristiques géographiques), METAR, AIRMET/SIGMET et pages météorologiques TFR.

2. Le procédé selon la revendication 1, dans lequel la mise à jour de la base de données exclut dynamiquement des éléments en dehors de ladite zone prédéterminée.

3. Le procédé selon la revendication 1, dans lequel ladite zone prédéterminée correspond à une zone visible sur ledit afficheur du dispositif.

4. Le procédé selon la revendication 1, dans lequel ladite zone prédéterminée correspond à l'emplacement dudit dispositif d'affichage.

5. Le procédé selon la revendication 1, dans lequel la mise à jour de la base de données comprend la modification d'un ou plusieurs desdits éléments sélectionnables ou desdites informations relatives auxdits éléments sélectionnables.

6. Le procédé selon la revendication 1, dans lequel la mise à jour de la base de données comprend la suppression d'un ou plusieurs desdits éléments sélectionnables ou desdites informations relatives auxdits éléments sélectionnables.

7. Le procédé selon la revendication 1, dans lequel la mise à jour de la base de données comprend l'ajout d'un ou plusieurs desdits éléments sélectionnables ou desdites informations relatives auxdits éléments sélectionnables.
